# EUROPEAN PATENT SPECIFICATION

(11) **EP 3 480 700 B1**
(45) Date of publication and mention of the grant of the patent: **09.02.2022**
(21) Application number: 17819920.4
(22) Date of filing: 19.06.2017
(51) Int. Cl.: G06F 11/30, G06F 11/07

(54) **ELECTRONIC CONTROL DEVICE**
ELEKTRONISCHE STEUERUNGSVORRICHTUNG
DISPOSITIF DE COMMANDE ÉLECTRONIQUE

(30) Priority: 30.06.2016 JP 2016130393
(43) Date of publication of application: 08.05.2019
(73) Proprietor: Hitachi Astemo, Ltd., Hitachinaka-shi, Ibaraki 312-8503 (JP)
(72) Inventor: MATSUBARA, Masahiro, Tokyo 100-8280 (JP); OHNO, Atsuhiro, Hitachinaka-shi Ibaraki 312-8503 (JP); NEMOTO, Mamoru, Hitachinaka-shi Ibaraki 312-8503 (JP)
(74) Representative: Strehl Schübel-Hopf & Partner
(86) International application number: PCT/JP2017/022453
(87) International publication number: WO 2018/003560

(56) References cited:
- EP-A1- 2 648 100
- JP-A- H11 502 652
- JP-A- 2009 048 556
- JP-A- 2013 095 379
- US-A- 5 630 053

## Description

### Technical Field

The present invention relates to an electronic control device.

### Background Art

Some electronic control devices such as in-vehicle control devices are configured by a single processor, and some electronic control devices are configured by a multiprocessor for reasons such as a computation amount and troubleshooting. Each processor may include a plurality of processor cores (multicore) for reasons such as suppression of power consumption in response to a request for improvement in processing performance.

PTL 1 below describes an electronic control device using a multicore microcomputer.

In PTL 1, a configuration in which data output by processing of a core 1 is input to a core 2 is adopted, and when the core 1 has completed the processing, the core 1 notifies the core 2 of the completion. In PTL 1, to cope with the case where this notification is wrong, a previous value output by the core 1 is compared with a latest value placed in a shared memory, and processing of the core 2 is activated only when a specific condition such as when both the values are different is satisfied.

The document US 5 630 053 A discloses an electronic control device according to the preamble of claim 1. The document EP 2 648 100 A1 discloses two monitoring units coupled to each other, wherein the monitoring units may supervise two processors any wherein the individual monitoring units may be activated under certain critical circumstances.

### Citation List

### Patent Literature

PTL 1: JP 2012-108786 A

### Summary of Invention

### Technical Problem

In an electronic control device in which a next computation device starts processing after completion of processing by another computation device as in the technology described in PTL 1, it is considered that, when a computation device at a preceding stage outputs an error, a computation device at a subsequent stage executes processing according to the error. At this time, when detection of the error of the computation device at the preceding stage by the computation device at the subsequent stage is delayed, coping with the error by the computation device at the subsequent stage is delayed, and the delay is accumulated in a computation device at a further subsequent stage, and there is a possibility of posing an obstacle to the entire flow.

The present invention has been made in view of the above problems, and an objective is to prevent accumulation of error detection delays that arise in the process of control processing in an electronic control device equipped with a plurality of computation devices.

### Solution to Problem

The problem is solved by an electronic control device according to claim 1.

An electronic control device according to the present invention includes first through third computation devices. A third computation device monitoring unit activates a second computation device monitoring unit. When the second computation device monitoring unit is activated by the third computation device monitoring unit, the second computation device monitoring unit confirms whether the first computation device has output an error, and notifies the third computation device of a result.

### Advantageous Effects of Invention

According to the electronic control device of the present invention, a detection delay when the third computation device detects an error that has occurred in the first computation device can be suppressed.

### Brief Description of Drawings

[FIG. 1] FIG. 1 is a configuration diagram of an electronic control device 101 according to a first embodiment.
[FIG. 2] FIG. 2 is a diagram illustrating processing and data flow among processor cores 121 through 123.
[FIG. 3] FIG. 3 is a flowchart for describing operation of a second confirmation unit 223.
[FIG. 4] FIG. 4 is a time chart for describing operation of each unit in a case where a failure occurs in the processor core 121.
[FIG. 5] FIG. 5 is an example of a software architecture for configuring functions described in the first embodiment.

### Description of Embodiments

### <First Embodiment>

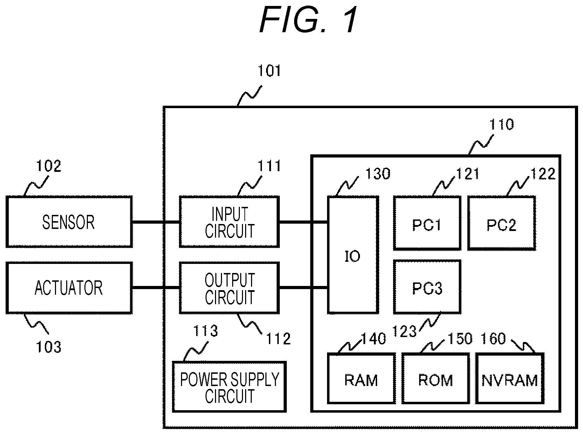

FIG. 1 is a configuration diagram of an electronic control device 101 according to a first embodiment of the present invention. The electronic control device 101 is connected to a sensor 102 and an actuator 103. The electronic control device 101 performs a control operation with information obtained from the sensor 102 as an input and outputs a control signal to the actuator 103. The actuator 103 is, for example, a brushless DC motor, and the sensor 102 is, for example, a Hall element.

The electronic control device 101 includes a microcomputer 110, an input circuit 111, an output circuit 112, and a power supply circuit 113. The input circuit 111 receives a detection signal from the sensor 102 and gives the detection signal over to the microcomputer 110. The output circuit 112 outputs a control signal from the microcomputer 110 to the actuator 103. The power supply circuit 113 controls electric power used by the electronic control device 101.

The microcomputer 110 includes three processor cores (PCs) 121 through 123, an IO 130, a random access memory (RAM) 140, a read only memory (ROM) 150, and a nonvolatile memory 160. These elements are connected by a bus.

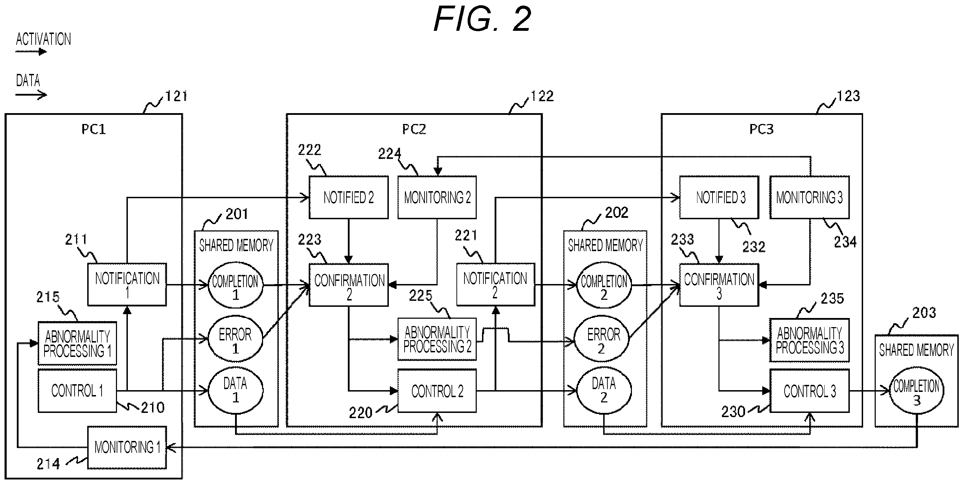

FIG. 2 is a diagram illustrating processing and data flow among the processor cores 121 through 123. Each of functional units described below that are provided in the processor cores 121 through 123 can be implemented as a program module. Each processor core reads programs from the ROM 150 and executes these programs, using the RAM 140 as a temporary storage. Shared memories 201 through 203 can be configured as storage areas on the RAM 140, which are shared and accessed by each processor core, for example. Initial value of each flag stored in the shared memories 201 through 203 is "invalid".

The processor core 121 includes a first control unit 210, a first notification unit 211, a first monitoring unit 214, and a first abnormality processing unit 215. The first control unit 210 performs a control operation at normal time. The first notification unit 211 notifies the processor core 122 that control processing of the first control unit 210 has been completed. The first monitoring unit 214 monitors whether control processing of a third control unit 230 (described below) has been completed. The first abnormality processing unit 215 performs abnormality processing.

The processor core 122 includes a second control unit 220, a second notification unit 221, a second notified unit 222, a second confirmation unit 223, a second monitoring unit 224, and a second abnormality processing unit 225. The second control unit 220 performs a control operation at normal time. The second notification unit 221 notifies the processor core 123 that control processing of the second control unit 220 has been completed. The second notified unit 222 receives a notification of completion of the control processing from the first control unit 210. The second confirmation unit 223 confirms whether the control processing of the first control unit 210 has been completed and whether the processor core 121 has output an error. The second monitoring unit 224 monitors whether the control processing of the first control unit 210 has been completed within a predetermined period. The second abnormality processing unit 225 performs abnormality processing.

The processor core 123 includes a third control unit 230, a third notified unit 232, a third confirmation unit 233, a third monitoring unit 234, and a third abnormality processing unit 235. The third control unit 230 performs a control operation at normal time. The third notified unit 232 receives a notification of completion of control processing from the second control unit 220. The third confirmation unit 233 confirms whether the control processing of the second control unit 220 has been completed and whether the processor core 122 has output an error. The third monitoring unit 234 monitors whether the control processing of the second control unit 220 has been completed within a predetermined period. The third abnormality processing unit 235 performs abnormality processing.

### <First Embodiment: Processing Flow at Normal Time>

The processor core 121 cyclically activates the first control unit 210 according to a timer provided in the processor core 121. The first control unit 210 performs the control operation using the signal received from the sensor 102, and outputs a result of the operation to the shared memory 201 as first data. When the first control unit 210 has completed the control processing, the first control unit 210 activates the first notification unit 211.

The first notification unit 211 writes a value indicating "valid" in a first completion flag on the shared memory 201, and notifies the second notified unit 222 of completion of the control processing. As a method of this notification, a synchronization mechanism such as a spin lock or a semaphore, or an interrupt. This also similarly applies to other notification units to be described below. When the second notified unit 222 has received the notification from the first notification unit 211, the second notified unit 222 activates the second confirmation unit 223 together with data indicating that an activation source is the second notified unit 222.

The second confirmation unit 223 reads the first completion flag. In a case where the first completion flag is "valid" (that is, the control processing of the first control unit 210 has been completed), the first data is given over to the second control unit 220 and the second control unit 220 is activated. Immediately after reading the first completion flag, the second confirmation unit 223 rewrites the value with "invalid".

The second control unit 220 performs the control processing with the first data as an input, and outputs a result of the processing to the shared memory 202 as second data. When the second control unit 220 has completed the control processing, the second control unit 220 activates the second notification unit 221.

The second notification unit 221 writes a value indicating "valid" in a second completion flag on the shared memory 202, and notifies the third notified unit 232 of completion of the control processing. When the third notified unit 232 has received the notification from the second notification unit 221, the third notified unit 232 activates the third confirmation unit 233 together with data indicating that the activation source is the third notified unit 232.

The third confirmation unit 233 reads the second completion flag. In a case where the second completion flag is "valid", the second data is given over to the third control unit 230, and the third control unit 230 is activated. Immediately after reading the second completion flag, the third confirmation unit 233 rewrites the value with "invalid".

The third control unit 230 performs the control processing with the second data as an input, and outputs a control signal obtained as a result to the actuator 103. When the third control unit 230 has completed the control processing, the third control unit 230 rewrites a third completion flag on the shared memory 203 with "valid".

### <First Embodiment: Abnormality Monitoring Processing Flow>

In a case where the first control unit 210 has detected abnormality such as the signal from the sensor 102 being out of range, the first control unit 210 rewrites a first error flag on the shared memory 201 with "valid".

The processor core 122 cyclically activates the second monitoring unit 224. An activation cycle of the second monitoring unit 224 is set, for example, in accordance with a cycle in which the first control unit 210 is assumed to complete the processing. The second monitoring unit 224 activates the second confirmation unit 223 together with data indicating that the activation source is the second monitoring unit 224. The second confirmation unit 223 activates the second abnormality processing unit 225 in a case where the first completion flag is "invalid" (that is, the control processing of the first control unit 210 is incomplete) or the first error flag is "valid". The second abnormality processing unit 225 rewrites a second error flag on the shared memory 202 with "valid". Immediately after reading the first error flag, the second confirmation unit 223 rewrites the value with "invalid".

The processor core 123 cyclically activates the third monitoring unit 234. An activation cycle of the third monitoring unit 234 is set, for example, in accordance with a cycle in which the second control unit 220 is assumed to complete the processing. The third monitoring unit 234 activates the third confirmation unit 233 together with data indicating that the activation source is the third monitoring unit 234. The third confirmation unit 233 activates the third abnormality processing unit 235 in a case where the second completion flag is "invalid" (that is, the control processing of the second control unit 220 is incomplete) or the second error flag is "valid". Immediately after reading the second error flag, the third confirmation unit 233 rewrites the value with "invalid".

After recording information indicating that the third abnormality processing unit 235 has detected abnormality to the nonvolatile memory 160, the third abnormality processing unit 235 stops the actuator 103 and then shuts down the processor core 123. After recordings information indicating that the second abnormality processing unit 225 has detected abnormality to the nonvolatile memory 160, the second abnormality processing unit 225 waits for a fixed time and then shuts down the processor core 122.

The third monitoring unit 234 activates the second monitoring unit 224 before activating the third confirmation unit 233.

To execute this activation, for example, an interrupt or the like can be used. After activating the second monitoring unit 224, the third monitoring unit 234 waits for a fixed time to wait for completion of the processing of the second confirmation unit 223, and then reads the second completion flag and the second error flag via the third confirmation unit 233. Since processing of the second confirmation unit 223 is merely reading each flag, the standby time of the third monitoring unit 234 is short. The second confirmation unit 223 may notify the third monitoring unit 234 of completion of the processing after completion of the processing, in place of the third monitoring unit 234 waiting for the fixed time. Through these procedures, the second monitoring unit 224 and the third monitoring unit 234 synchronously operate.

In this way, the second monitoring unit 224 operating on the processor core 122 at a preceding stage of the processing is activated from the third monitoring unit 234 operating on the processor core 123 at a subsequent stage of the processing, whereby the abnormality detected by the second confirmation unit 223 is transmitted to the third confirmation unit 233 without separating a large time. In contrast, if the second monitoring unit 224 and the third monitoring unit 234 operate without synchronization, there is a possibility of occurrence of a delay in transmission of the abnormality detection between the processor cores 122 and 123 in accordance with a gap in activation timing between the second monitoring unit 224 and the third monitoring unit 234. According to the first embodiment, accumulation of such a propagation delay can be suppressed.

The processor core 122 activates the second monitoring unit 224 on a cycle T2. The processor core 123 activates the third monitoring unit 234 on a cycle T3. A timer for activating the second monitoring unit 224, a timer for activating the third monitoring unit 234, and a timer for activating the first control unit 210 are independent of one another. T2 and T3 are set to values larger than the activation cycle of the first control unit 210 so that the second monitoring unit 224 and the third monitoring unit 234 do not erroneously detect incompletion of the processing. Further, T3 ≦ T2 is set as a cycle restriction. With the restriction, not only does the second monitoring unit 224 operate in synchronization with the third monitoring unit 234, the second monitoring unit 224 can also monitor incompletion of the processing of the first control unit 210 even in a case where the third monitoring unit 234 is not activated due to abnormality in the timer that activates the third monitoring unit 234, and further, the second monitoring unit 224 is not activated by the third monitoring unit 234.

The processor core 121 is located at the forefront stage of the control operation but the first monitoring unit 214 is cyclically activated and reads the third completion flag in order to monitor incompletion of the processing of the third control unit 230 of the processor core 123 located at the last stage of the control operation. The timer used for this activation is different from the timer that activates the first control unit 210 and the like. Immediately after reading the third completion flag, the first monitoring unit 214 rewrites the value with "invalid". When the third completion flag is "invalid", the first monitoring unit 214 activates the first abnormality processing unit 215. The first abnormality processing unit 215 shuts down the processor core 121. Incompletion of the processing of all the processor cores can be monitored by the first monitoring unit 214.

The second confirmation unit 223, the third confirmation unit 233, and the first abnormality processing unit 215 may include an error counter. In this case, when the first through third completion flags are "valid", the error counter is cleared, and when the first through third completion flags are "invalid", the error counter is incremented by one. When the error counter exceeds a threshold value, the second abnormality processing unit 225/the third abnormality processing unit 235/the first abnormality processing unit 215 are activated.

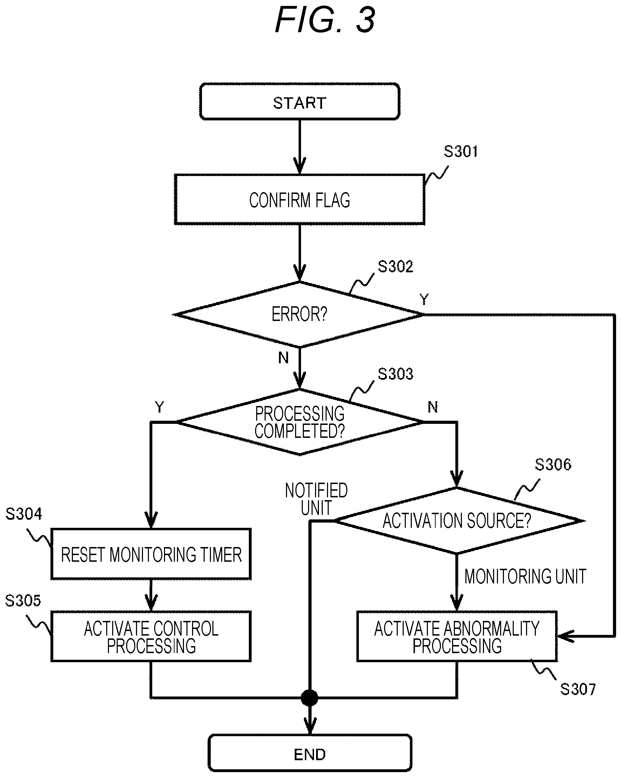

FIG. 3 is a flowchart for describing the operation of the second confirmation unit 223. The third confirmation unit 233 also operates in accordance with a similar flowchart, so that description is omitted. Hereinafter, each step of FIG. 3 will be described.

### (FIG. 3: Steps S301 and S302)

The second confirmation unit 223 reads the first error flag (S301) . In the case where the first error flag is "valid", the processing proceeds to step S307, otherwise proceeds to step S303 (S302).

### (FIG. 3: Step S303)

The second confirmation unit 223 reads the first completion flag. In the case where the first completion flag is "invalid", the processing proceeds to step S306. Otherwise, the processing proceeds to step S304.

### (FIG. 3: Steps S304 and S305)

The second confirmation unit 223 resets the activation timer of the second monitoring unit 224 (S304) . For example, when the timer counter is decremented to 0 as time progresses, the timer counter is set to T2 in the case of the timer that activates the second monitoring unit 224. The second confirmation unit 223 activates the second control unit 220 (S305).

### (FIG. 3: Steps S306 and S307)

The second confirmation unit 223 determines the activation source on the basis of data given at the time of activation (S306). When the activation source is the second monitoring unit 224, the processing proceeds to step S307. When the activation source is the second notified unit 222, the present flowchart is terminated. The second confirmation unit 223 activates the second abnormality processing unit 225 (S307).

### (FIG. 3: Steps S306 and S307: Supplement)

According to these steps, in the case where the processing completion of the first control unit 210 is erroneously notified to the second notified unit 222, the second control unit 220 is not erroneously activated. In the case where the activation source is the second notified unit 222 in step S306, abnormality processing different from the processing of the second abnormality processing unit 225 may be performed, such as taking a log of the activation source.

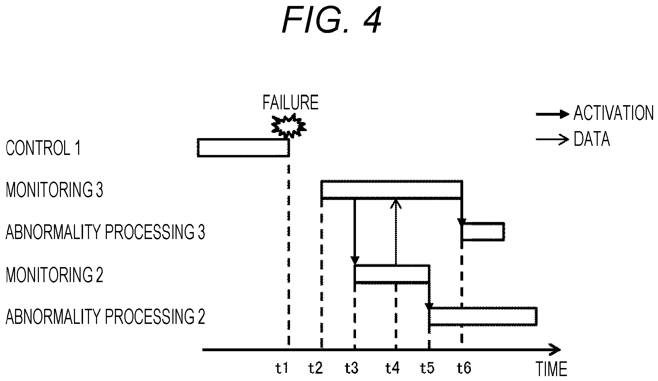

FIG. 4 is a time chart for describing operation of each unit in a case where a failure occurs in the processor core 121. It is assumed that a failure has occurred in the first control unit 210 at time t1, and the processing does not proceed. At time t2, the third monitoring unit 234 is activated. At time t3, the third monitoring unit 234 activates the second monitoring unit 224. By time t4, the second monitoring unit 224 confirms "invalid" of the first completion flag, and sets the second error flag to "valid". At time t5, the second monitoring unit 224 activates the second abnormality processing unit 225. By time t6, the third monitoring unit 234 confirms the "valid" of the second error flag, and activates the third abnormality processing unit 235 at the time t6. After activating the second monitoring unit 224, the third monitoring unit 234 waits for a fixed time so as to restart after the time t4.

### <First Embodiment: Conclusion>

In the electronic control device 101 according to the first embodiment, the third monitoring unit 234 activates the second monitoring unit 224, whereby the processor core 123 knows the error that has occurred in the processor core 121 at an early stage. As a result, accumulation of delays as the error that has occurred in the processor core 121 is transmitted to the processor core 123 can be suppressed.

The electronic control device 101 according to the first embodiment confirms whether each completion flag is "valid" within a predetermined period, thereby to monitor whether each task has been completed within a predetermined period. That is, a deadline monitoring function can be realized.

### <Second Embodiment>

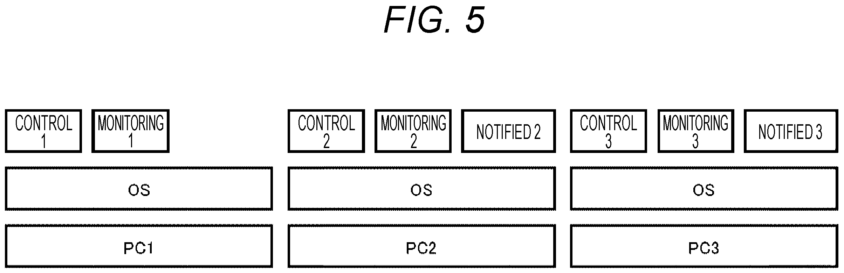

FIG. 5 is an example of a software architecture for configuring functions described in the first embodiment. A real-time operation system (OS) operates on each of the processor cores 121 through 123, and the first control unit 210/the second control unit 220/the third control unit 230, the first monitoring unit 214/the second monitoring unit 224/the third monitoring unit 234, and the second notified unit 222/the third notified unit 232 operate on the real-time OS. These programs are registered as OS tasks. Execution priorities of the respective tasks are relatively set such that the first control unit 210/the second control unit 220/the third control unit 230 are "medium", the first monitoring unit 214/the second monitoring unit 224/the third monitoring unit 234 are "high", and the second notified unit 222/the third notified unit 232 are "low", or the like.

Though not illustrated, the first abnormality processing unit 215/the second abnormality processing unit 225/the third abnormality processing unit 235 and the like are also registered as tasks.

The real-time OS typically has a function to monitor execution time of a task. As the OS having the execution time monitoring function, there are AUTOSAR OS and the like. The execution time here is net required execution time excluding time when the task is temporarily stopped out of the time required from the start to completion of the task. In execution time monitoring processing, the real-time OS specifies the task that is the cause of deadline violation from the log stored in a nonvolatile memory 160. For example, the first control unit 210/the second control unit 220/the third control unit 230 are monitored for the execution time. As a result, when there is deadline violation, whether the cause is in any of the first control unit 210/the second control unit 220/the third control unit 230 or in other processing can be identified.

Although the technique described in the first embodiment can detect occurrence of the deadline violation, it is difficult to specify which task is the cause of the violation. Therefore, as in the second embodiment, the task that requires long execution time is identified further using the execution time monitoring function, whereby the task of the cause can be identified when the deadline violation has occurred.

### <Modification of Present Invention>

The present invention is not limited to the above-described embodiments and includes various modifications. For example, the above embodiments have been described in detail for describing the present invention in an easy-to-understand manner, and the present invention is not necessarily limited to one including all the described configurations. Further, a part of the configuration of a certain embodiment can be replaced with the configuration of another embodiment. Further, the configuration of another embodiment can be added to the configuration of a certain embodiment. Further, another configuration can be added to, deleted from, replaced with a part of the configurations of each embodiment.

In the above embodiments, the configuration in which the error flags and the completion flags are monitored among the processor cores has been described. However, a similar technique can be used in a configuration for monitoring error flags and completion flags among processors in a multiprocessor system.

In the above embodiments, each of the shared memories 201 through 203 is provided between the processor cores. However, it may be configured such that the processor cores connect in parallel to a single shared memory respectively.

In the above embodiments, the processor core 121 may include a first notification unit that receives a notification from another processor core and a first confirmation unit that confirms a log according to the notification. Further, the processor core 123 may include a third notification unit that notifies another processor core of completion of processing.

In the above embodiment, the configuration including the three processor cores 121 through 123 has been described. However, even in a configuration including four or more processor cores, an error at a preceding stage can be notified to a subsequent stage early, adopting a similar technique.

A part of the above-described configurations, functions, processing units, and processing means may be realized by hardware by being designed with an integrated circuit or the like. Further, the above-described configurations, functions, and the like may be realized by software in such a manner that the processor interprets and executes programs that realize the respective functions. Information of programs, tables, and files that realize the functions can be stored in a recording device such as a memory, a hard disk, or a solid state drive (SSD), or in a recording medium such as an IC card, an SD card, or a DVD.

### Reference Signs List

- 101: electronic control device
- 121: through 123 processor core
- 210: first control unit
- 211: first notification unit
- 214: first monitoring unit
- 215: first abnormality processing unit
- 220: second control unit
- 221: second notification unit
- 222: second notified unit
- 223: second confirmation unit
- 224: second monitoring unit
- 225: second abnormality processing unit
- 230: third control unit
- 232: third notified unit
- 233: third confirmation unit
- 234: third monitoring unit
- 235: third abnormality processing unit

## Claims

1. An electronic control device (101) for controlling an object to be controlled, the electronic control device (101) comprising:
a first computation device (121), a second computation device (122), and a third computation device (123) (123) configured to execute processing of controlling the object to be controlled, wherein
the first computation device (121) notifies the second computation device (122) of whether a control operation executed by the first computation device (121) has normally ended,
the second computation device (122) includes a second computation device monitoring unit (224) that monitors whether the first computation device (121) has output an error,
the third computation device (123) includes a third computation device monitoring unit (234) that monitors whether the second computation device (122) has output an error, **characterized in that**
the third computation device monitoring unit (234) activates the second computation device monitoring unit (224) before confirming whether the second computation device (122) has output an error, and
when the second computation device monitoring unit (224) is activated by the third computation device monitoring unit (234), the second computation device monitoring unit (224) confirms whether the first computation device (121) has output an error and notifies the third computation device (123) of a result of the confirmation.

2. The electronic control device (101) according to claim 1, wherein
the third computation device monitoring unit (234) operates on a shorter cycle than the second computation device monitoring unit (224).

3. The electronic control device (101) according to claim 2, wherein
the second computation device monitoring unit (224) and the third computation device monitoring unit (234) operate according to timers independent of each other, and
when the second computation device monitoring unit (224) is activated by the third computation device monitoring unit (234), the second computation device monitoring unit (224) resets the timer that the second computation device monitoring unit (224) relies on.

4. The electronic control device (101) according to claim 1, wherein
the second computation device monitoring unit (224) monitors whether the first computation device (121) has completed the control operation,
the second computation device (122) starts a control operation when the second computation device monitoring unit (224) has confirmed that the first computation device (121) has completed the control operation,
the third computation device monitoring unit (234) monitors whether the second computation device (122) has completed the control operation, and
the third computation device (123) starts a control operation when the third computation device monitoring unit (234) has confirmed that the second computation device (122) has completed the control operation.

5. The electronic control device (101) according to claim 4, wherein
the second computation device (122) starts the control operation, using a result of the control operation executed by the first computation device (121), and
the third computation device (123) starts the control operation, using a result of the control operation executed by the second computation device (122).

6. The electronic control device (101) according to claim 4, wherein,
when the second computation device monitoring unit (224) has confirmed that the first computation device (121) has not completed the control operation within a predetermined time, the second computation device (122) outputs an error of the incompletion of the control operation, and
when the third computation device monitoring unit (234) has confirmed that the second computation device (122) has not completed the control operation within a predetermined time, the third computation device (123) outputs an error of the incompletion of the control operation.

7. The electronic control device (101) according to claim 6, wherein
the electronic control device (101) executes an operating system for controlling operation of the electronic control device (101), and
the electronic control device (101) monitors a net execution time required to complete the control operations respectively executed by the first computation device (121), the second computation device (122), and the third computation device (123), via the operating system.

8. The electronic control device (101) according to claim 1, wherein
the first computation device (121) includes a first computation device monitoring unit (214) that monitors whether another computation device (123) has completed a control operation within a predetermined time, and
when the first computation device monitoring unit (214) has confirmed that the another computation device (123) has not completed the control operation within a predetermined time, the first computation device (121) outputs an error of the incompletion of the control operation.

## Patentansprüche

1. Elektronische Steuervorrichtung (101) zum Steuern eines zu steuernden Objekts, wobei die elektronische Steuervorrichtung (101) umfasst:
eine erste Berechnungsvorrichtung (121), eine zweite Berechnungsvorrichtung (122) und eine dritte Berechnungsvorrichtung (123), die so konfiguriert sind, dass sie den Prozess der Steuerung des zu steuernden Objekts ausführen, wobei
die erste Berechnungsvorrichtung (121) der zweiten Berechnungsvorrichtung (122) mitteilt, ob ein von der ersten Berechnungsvorrichtung (121) ausgeführter Steuerungsvorgang normal beendet wurde,
die zweite Berechnungsvorrichtung (122) eine zweite Berechnungsvorrichtungsüberwachungseinheit (224) enthält, die überwacht, ob die erste Berechnungsvorrichtung (121) eine Fehlermeldung ausgegeben hat,
die dritte Berechnungsvorrichtung (123) eine dritte Berechnungsvorrichtungsüberwachungseinheit (234) enthält, die überwacht, ob die zweite Berechnungsvorrichtung (122) eine Fehlermeldung ausgegeben hat,
**dadurch gekennzeichnet, dass**
die dritte Berechnungsvorrichtungsüberwachungseinheit (234) die zweite Berechnungsvorrichtungsüberwachungseinheit (224) aktiviert, bevor sie bestätigt, ob die zweite Berechnungsvorrichtung (122) eine Fehlermeldung ausgegeben hat, und
wenn die zweite Berechnungsvorrichtungsüberwachungseinheit (224) von der dritten Berechnungsvorrichtungsüberwachungseinheit (234) aktiviert wird, die zweite Berechnungsvorrichtungsüberwachungseinheit (224) überprüft, ob die erste Berechnungsvorrichtung (121) eine Fehlermeldung ausgegeben hat, und die dritte Berechnungsvorrichtung (123) über ein Ergebnis der Überprüfung benachrichtigt.

2. Elektronische Steuervorrichtung (101) nach Anspruch 1, wobei
die dritte Berechnungsvorrichtungsüberwachungseinheit (234) mit einem kürzeren Zyklus arbeitet als die zweite Berechnungsvorrichtungsüberwachungseinheit (224).

3. Elektronische Steuervorrichtung (101) nach Anspruch 2, wobei
die zweite Berechnungsvorrichtungsüberwachungseinheit (224) und die dritte Berechnungsvorrichtungsüberwachungseinheit (234) nach voneinander unabhängigen Zeitgebern arbeiten, und
wenn die zweite Berechnungsvorrichtungsüberwachungseinheit (224) von der dritten Berechnungsvorrichtungsüberwachungseinheit (234) aktiviert wird, die zweite Berechnungsvorrichtungsüberwachungseinheit (224) den Zeitgeber zurücksetzt, auf den sich die zweite Berechnungsvorrichtungsüberwachungseinheit (224) stützt.

4. Elektronische Steuervorrichtung (101) nach Anspruch 1, wobei
die zweite Berechnungsvorrichtungsüberwachungseinheit (224) überwacht, ob die erste Berechnungsvorrichtung (121) den Steuerungsvorgang abgeschlossen hat,
die zweite Berechnungsvorrichtung (122) einen Steuerungsvorgang beginnt, wenn die zweite Berechnungsvorrichtungsüberwachungseinheit (224) bestätigt hat, dass die erste Berechnungsvorrichtung (121) den Steuerungsvorgang abgeschlossen hat,
die dritte Berechnungsvorrichtungsüberwachungseinheit (234) überwacht, ob die zweite Berechnungsvorrichtung (122) den Steuervorgang abgeschlossen hat, und
die dritte Berechnungsvorrichtung (123) einen Steuervorgang startet, wenn die dritte Berechnungsvorrichtungsüberwachungseinheit (234) bestätigt hat, dass die zweite Berechnungsvorrichtung (122) den Steuervorgang abgeschlossen hat.

5. Elektronische Steuervorrichtung (101) nach Anspruch 4, wobei
die zweite Berechnungsvorrichtung (122) die Steueroperation unter Verwendung eines Ergebnisses der von der ersten Berechnungsvorrichtung (121) ausgeführten Steueroperation beginnt, und
die dritte Berechnungsvorrichtung (123) die Steueroperation unter Verwendung eines Ergebnisses der von der zweiten Berechnungsvorrichtung (122) ausgeführten Steueroperation startet.

6. Elektronische Steuervorrichtung (101) nach Anspruch 4, wobei,
wenn die zweite Berechnungsvorrichtungsüberwachungseinheit (224) bestätigt hat, dass die erste Berechnungsvorrichtung (121) den Steuerungsvorgang nicht innerhalb einer vorbestimmten Zeit abgeschlossen hat, die zweite Berechnungsvorrichtung (122) eine die Unvollständigkeit des Steuerungsvorgangs betreffende Fehlermeldung ausgibt, und
wenn die dritte Berechnungsvorrichtungsüberwachungseinheit (234) bestätigt hat, dass die zweite Berechnungsvorrichtung (122) die Steueroperation nicht innerhalb einer vorbestimmten Zeit abgeschlossen hat, gibt die dritte Berechnungsvorrichtung (123) eine den unvollständigen Abschluss der Steueroperation betreffende Fehlermeldung aus.

7. Elektronische Steuervorrichtung (101) nach Anspruch 6, wobei
die elektronische Steuervorrichtung (101) ein Betriebssystem zur Steuerung des Betriebs der elektronischen Steuervorrichtung (101) ausführt, und
die elektronische Steuervorrichtung (101) eine Nettoausführungszeit überwacht, die erforderlich ist, um die Steueroperationen, die jeweils von der ersten Rechenvorrichtung (121), der zweiten Rechenvorrichtung (122) und der dritten Rechenvorrichtung (123) ausgeführt werden, über das Betriebssystem abzuschließen.

8. Elektronische Steuervorrichtung (101) nach Anspruch 1, wobei
die erste Berechnungsvorrichtung (121) eine erste Berechnungsvorrichtungsüberwachungseinheit (214) enthält, die überwacht, ob eine andere Berechnungsvorrichtung (123) innerhalb einer vorbestimmten Zeit einen Steuerungsvorgang abgeschlossen hat, und
die erste Berechnungsvorrichtung (121) eine erste Berechnungsvorrichtungsüberwachungseinheit (214) enthält, die überwacht, ob eine andere Berechnungsvorrichtung (123) innerhalb einer vorbestimmten Zeit einen Steuerungsvorgang abgeschlossen hat, und wenn die erste Berechnungsvorrichtungsüberwachungseinheit (214) bestätigt hat, dass die andere Berechnungsvorrichtung (123) den Steuerungsvorgang nicht innerhalb einer vorbestimmten Zeit abgeschlossen hat, die erste Berechnungsvorrichtung (121) eine die Unvollständigkeit des Steuerungsvorgangs betreffende Fehlermeldung ausgibt.

## Revendications

1. Dispositif (101) de commande électronique pour commander un objet devant être commandé, le dispositif (101) de commande électronique comprenant :
un premier dispositif (121) de calcul, un deuxième dispositif (122) de calcul, et un troisième dispositif (123) de calcul configurés pour exécuter un traitement de commande de l'objet devant être commandé, dans lequel
le premier dispositif (121) de calcul notifie le deuxième dispositif (122) de calcul si une opération de commande exécutée par le premier dispositif (121) de calcul s'est terminée normalement,
le deuxième dispositif (122) de calcul inclut une unité (224) de surveillance de deuxième dispositif de calcul qui surveille si le premier dispositif (121) de calcul a délivré en sortie une erreur,
le troisième dispositif (123) de calcul inclut une unité (234) de surveillance de troisième dispositif de calcul qui surveille si le deuxième dispositif (122) de calcul a délivré en sortie une erreur,
**caractérisé en ce que**
l'unité (234) de surveillance de troisième dispositif de calcul active l'unité (224) de surveillance de deuxième dispositif de calcul avant de confirmer si le deuxième dispositif (122) de calcul a délivré en sortie une erreur, et
lorsque l'unité (224) de surveillance de deuxième dispositif de calcul est activée par l'unité (234) de surveillance de troisième dispositif de calcul, l'unité (224) de surveillance de deuxième dispositif de calcul confirme si le premier dispositif (121) de calcul a délivré en sortie une erreur et notifie le troisième dispositif (123) de calcul d'un résultat de la confirmation.

2. Dispositif (101) de commande électronique selon la revendication 1, dans lequel
l'unité (234) de surveillance de troisième dispositif de calcul opère sur un cycle plus court que l'unité (224) de surveillance de deuxième dispositif de calcul.

3. Dispositif (101) de commande électronique selon la revendication 2, dans lequel
l'unité (224) de surveillance de deuxième dispositif de calcul et l'unité (234) de surveillance de troisième dispositif de calcul opèrent selon des temporisateurs indépendant l'un de l'autre, et
lorsque l'unité (224) de surveillance de deuxième dispositif de calcul est activée par l'unité (234) de surveillance de troisième dispositif de calcul, l'unité (224) de surveillance de deuxième dispositif de calcul réinitialise le temporisateur sur lequel l'unité (224) de surveillance de deuxième dispositif de calcul se fonde.

4. Dispositif (101) de commande électronique selon la revendication 1, dans lequel
l'unité (224) de surveillance de deuxième dispositif de calcul surveille si le premier dispositif (121) de calcul a mené à bien l'opération de commande,
le deuxième dispositif (122) de calcul démarre une opération de commande lorsque l'unité (224) de surveillance de deuxième dispositif de calcul a confirmé que le premier dispositif (121) de calcul a mené à bien l'opération de commande,
l'unité (234) de surveillance de troisième dispositif de calcul surveille si le deuxième dispositif (122) de calcul a mené à bien l'opération de commande, et
le troisième dispositif (123) de calcul démarre une opération de commande lorsque l'unité (234) de surveillance de troisième dispositif de calcul a confirmé que le deuxième dispositif (122) de calcul a mené à bien l'opération de commande.

5. Dispositif (101) de commande électronique selon la revendication 4, dans lequel
le deuxième dispositif (122) de calcul démarre l'opération de commande, en utilisant un résultat de l'opération de commande exécutée par le premier dispositif (121) de calcul, et
le troisième dispositif (123) de calcul démarre l'opération de commande, en utilisant un résultat de l'opération de commande exécutée par le deuxième dispositif (122) de calcul.

6. Dispositif (101) de commande électronique selon la revendication 4, dans lequel,
lorsque l'unité (224) de surveillance de deuxième dispositif de calcul a confirmé que le premier dispositif (121) de calcul n'a pas mené à bien l'opération de commande dans un délai prédéterminé, le deuxième dispositif (122) de calcul délivre en sortie une erreur de non menée à bien de l'opération de commande, et
lorsque l'unité (234) de surveillance de troisième dispositif de calcul a confirmé que le deuxième dispositif (122) de calcul n'a pas mené à bien l'opération de commande dans un délai prédéterminé, le troisième dispositif (123) de calcul délivre en sortie une erreur de non menée à bien de l'opération de commande.

7. Dispositif (101) de commande électronique selon la revendication 6, dans lequel
le dispositif (101) de commande électronique exécute un système d'exploitation pour commander une opération du dispositif (101) de commande électronique, et
le dispositif (101) de commande électronique surveille une durée d'exécution nette requise pour mener à bien les opérations de commande respectivement exécutées par le premier dispositif (121) de calcul, le deuxième dispositif (122) de calcul, et le troisième dispositif (123) de calcul, par l'intermédiaire du système d'exploitation.

8. Dispositif (101) de commande électronique selon la revendication 1, dans lequel
le premier dispositif (121) de calcul inclut une unité (214) de surveillance de premier dispositif de calcul qui surveille si un autre dispositif (123) de calcul a mené à bien une opération de commande dans un délai prédéterminé, et
lorsque l'unité (214) de surveillance de premier dispositif de calcul a confirmé que l'autre dispositif (123) de calcul n'a pas mené à bien l'opération de commande dans un délai prédéterminé, le premier dispositif (121) de calcul délivre en sortie une erreur de non menée à bien de l'opération de commande.
